# EUROPÄISCHE PATENTSCHRIFT

(11) **EP 1 056 656 B1**
(45) Veröffentlichungstag und Bekanntmachung des Hinweises auf die Patenterteilung: **28.05.2003**
(21) Anmeldenummer: 99901562.1
(22) Anmeldetag: 08.02.1999
(51) Int. Cl.: B65D 65/40, B32B 3/30, G03H 1/02

(54) **TUBEN-VERPACKUNGSLAMINAT**
TUBE PACKING LAMINATE
LAMINE D'EMBALLAGE POUR TUBES

(30) Priorität: 26.02.1998 EP 98810155
(43) Veröffentlichungstag der Anmeldung: 06.12.2000
(73) Patentinhaber: Alcan Technology & Management AG, 8212 Neuhausen am Rheinfall (CH)
(72) Erfinder: GERBER, Manfred, D-78224 Singen (DE); WENDT, Jürgen, D-78247 Weiterdingen (DE); HUMMEL, Otto, D-78224 Singen (DE)
(86) Internationale Anmeldenummer: CH9900056
(87) Internationale Veröffentlichungsnummer: WO99043570

(56) Entgegenhaltungen:
- EP-A- 0 297 764
- WO-A-89/03760
- DE-A- 4 025 296
- FR-A- 2 697 808
- US-A- 4 725 111
- PATENT ABSTRACTS OF JAPAN vol. 096, no. 011, 29. November 1996 & JP 08 179679 A (TOPPAN PRINTING CO LTD), 12. Juli 1996
- PATENT ABSTRACTS OF JAPAN vol. 096, no. 002, 29. Februar 1996 & JP 07 261646 A (TOPPAN PRINTING CO LTD), 13. Oktober 1995
- PATENT ABSTRACTS OF JAPAN vol. 095, no. 005, 30. Juni 1995 & JP 07 040426 A (TOPPAN PRINTING CO LTD), 10. Februar 1995
- PATENT ABSTRACTS OF JAPAN vol. 018, no. 513 (P-1805), 27. September 1994 & JP 06 175567 A (TOPPAN PRINTING CO LTD), 24. Juni 1994
- PATENT ABSTRACTS OF JAPAN vol. 016, no. 311 (M-1277), 8. Juli 1992 & JP 04 087960 A (DAINIPPON PRINTING CO LTD), 19. März 1992

## Beschreibung

Vorliegende Erfindung betrifft ein Tuben-Verpackungslaminat mit hologrammähnlichem Erscheinungsbild.

Es ist bekannt, Verpackungsmaterialien oder Hilfsmittel zur Verpackung, wie Etiketten oder Siegelstreifen mit Hologrammen als unverfälschbare Herkunftsbezeichnung oder als Originalitätsverschluss zu versehen. Die Erzeugung von Hologrammen bedarf ausgesuchter Einzelmaterialien, die in mehreren Bearbeitungsschritten zum Endprodukt verarbeitet werden. Verpackungen mit Hologrammen ergeben bei Konsumenten den Eindruck hoher Güte des in der Verpackung enthaltenen Produktes.

Die DE-A-40 25 296 beschreibt die Herstellung eines Hologrammes auf einem Blatt, indem ein holographisches Muster mittels einer eine Hologrammrelief-Masterplatte enthaltenden Kühlwalze auf einen dünnen Film eines extrudierten Polyproplen-Kunstharzes ausgeformt wird.

Der Patent Abstract of Japan, vol. 096, no. 002, 13.10.95 beschreibt die Herstellung eines Verpackungsmaterials mit einem Hologramm, wobei das Hologramm mittels einer ein Hologramm-Prägestempel enthaltenden Kühlwalze auf eine Kunststoff-Oberfläche des Verpakkungsmaterials aufgebracht wird. Auf die das Hologramm ausbildende Kunststoff-Oberfläche wird eine Schicht aus Metall oder einem Metalloxid abgeschieden.

Der Patent Abstract of Japan, vol. 096, no. 011, 12.07.96 beschreibt die Herstellung eines Blattes mit einem eingeprägten Hologramm, wobei das Hologramm auf die Oberfläche einer Kunststoff-Schicht aufgebracht wird, welche geprägte Hologramm-Oberfläche mit einer reflektierenden Metallschicht beschichtet wird. Das Hologramm wird mit einem die Hologramm-Oberfläche einebnenden Überzug versehen.

Die EP-A-0 297 764 beschreibt die Herstellung eines Hologrammes auf eine metallische Oberfläche. Das Hologramm wird in die metallische Oberfläche eingeprägt, welche Oberfläche anschliessend mit einem transparenten Überzug aus einem thermoplastischen Kunststoff versehen wird.

Es gibt nun viele Verpackungen, die nicht durch eine aufwendige Hologrammlösung gegen Verfälschung geschützt werden müssen, man möchte jedoch gerne den Güteeindruck des Hologramms auf eine kostengünstigere Verpackung übernehmen können.

Aufgabe vorliegender Erfindung ist es ein Verpackungsmaterial vorzuschlagen, welches ganz oder in Teilbereichen an einer Verpackung, wenigstens auf dessen nach aussen weisenden Seite, ein hologrammähnliches Erscheinungsbild aufweist.

Erfindungsgemäss wird dies dadurch erreicht, dass das Tuben-Verpackungslaminat ein mehrschichtiges Material ist mit einem Schichtaufbau, bestehend aus:
a₁) einer oder mehreren funktionellen Schichten aus Kunststoff, darauf angeordnet
   a) eine ganz- oder teilflächig geprägte Metallfolie, darauf angeordnet
   b) eine zumindest in Teilbereichen transparenten mehrlagige Kunststoffschicht aus
b₁) einer Lackkaschierung oder einem Schmelzextrudat,
b₂) einer auf der Schicht b₁) angeordneten Folie enthaltend ein Polyolefin,
wobei die Prägung ein Raster oder ein sich regelmässig oder unregelmässig wiederholendes Muster, wie Damast- oder Würmchenmuster, ist, und an einer Verpackung die Kunststoffschicht b₂) die aussen liegende Schicht bildet und die Prägung der Metallfolie a) durch die transparenten Bereiche der Kunststoffschicht b) sichtbar ist.

Die Kunststoffschicht b) weist an einer fertigen Verpackung, hergestellt aus dem vorliegenden Verpackungsmaterial, gegen aussen. Auf der freien Seite der Metallfolie können weitere funktionellen Schichten, beispielsweise aus Kunststoff und/oder Papier angeordnet sein.

Als Metallfolie kann beispielsweise eine Eisen-, Stahl-, Kupfer-, Silber-, Gold- und insbesondere eine Aluminiumfolie angewendet werden. Die Folien können eine Dicke von beispielsweise 7 bis 100, zweckmässig 7 bis 40 und vorteilhaft 8 bis 40 µm, aufweisen. Die Aluminiumfolien können aus reinem Aluminium, mit einer Reinheit von beispielsweise 98,3% und höher sein oder können aus einer Aluminiumlegierung, beispielsweise der Typen AlFeSi oder AlFeSiMn sein. Werden metallisierte Kunststofffolien eingesetzt, kann der Kunststoff der Folie z.B. aus Polyamiden, Polyestern, Polyolefinen, Polyvinylchlorid, Polycarbonaten usw. sein. Die Dicke der Kunststofffolien kann z.B. von 7, vorzugsweise12, bis 100 µm betragen. Auf wenigstens einer der Oberflächen der Kunststofffolie ist eine Metallschicht in einer Dicke von beispielsweise 5 bis 500 nm (Nanometer), erzeugt durch ein Metallisierungsverfahren, wie einer physikalischen oder chemischen Dünnschichtabscheidung im Vakuum, durch Sputtern usw., aus Eisen, Nickel, Chrom, Kupfer, Silber, Gold, Aluminium etc. vorhanden.

Die Metallfolie weisen eine Prägung auf. Die Prägung kann vollflächig, teilflächig oder partiell angebracht sein. Die Prägung kann durch Prägewalzen auf die Folien gebracht werden. Die Prägswalzen weisen das gewünschte Prägemuster auf und die Folien werden zwischen der Prägewalze und einer Gegendruckwalze, z.B. mit Papierbeschichtung, durchgeführt. Auf die Folie wird das Abbild der Walzenprägung übertragen. Die Prägung kann ein Raster, sich regelmässig oder unregelmässig wiederholende beliebige Muster, eine Damastprägung, Würmchenprägung, Hammerschlagprägung usw. sein. Jede andere Prägung ist möglich, wie Schriften, figürliche und abstrakte Darstellungen, bildhafte Darstellungen, Logos oder Kombinationen davon. Es ist auch möglich, sowohl geprägte Bereiche, als fallweise auch dazwischenliegende nicht geprägte Bereiche, einzufärben oder zu bedrucken. Damit kann die optische Wirkung einer Prägung verändert werden, wie z.B. verstärkt, abgeschwächt oder mit dem Lichteinfall wechselnd.

Die einlagige Kunststoffschicht kann ein durch Kalandrieren, beispielsweise durch Heisskalandrieren, erzeugter Kunststofffilm sein Die Dicke des kalandrierten einlagigen Kunststofffilms kann 20 bis 200 µm betragen. Als Kunststoffe können thermoplastische Kunststoffe, wie Polyolefine angewendet werden. Die Kunststoffschicht kann ein durch Coextrusion erzeugter wenigstens zweilagiger Kunststofffilm sein. Die Schichtdicke jeder einzelnen Schicht kann 20 bis 200 µm betragen. Als Kunststoffe können thermoplastische Kunststoffe, wie Ionomerharze (Surlyn) und Polyolefine angewendet werden. Die Kunststoffschicht kann ein durch Lackkaschierung auf die Metallfolie aufgebrachter Film aus thermoplastischem Kunststoff sein. Zweckmässig ist eine lösemittelhaltige oder lösemittelfreie Lackkaschierung. Die Lackkaschierung kann ein Polyolefin enthalten oder daraus bestehen. Ein Film aus thermoplastischem Kunststoff kann auch mittels eines Schmelzextrudates aus einem thermoplastischen Kunststoff auf die Metallfolie aufgebracht werden. Das Schmelzextrudat kann ein Polyolefin enthalten oder daraus bestehen. Die angewendeten Mengen an Lack oder Schmelzextrudat können von 3 bis 80 g/m² und zweckmässig von 30 bis 50 g/m² betragen. Der Film aus thermoplastischem Kunststoff kann ein Monofilm oder ein zwei-, dreioder mehrlagiger Film, resp. Laminat, sein. Der Film enthält Polyolefine oder besteht aus Polyolefinen. Die Gesamtdicke des Filmes aus thermoplastischen Kunststoffen beträgt beispielsweise 20 bis 200, zweckmässig 40 bis 150 und vorzugsweise 90 bis 120 µm.

Die Kunststoffschicht ist zweckmässig transparent oder zumindest in Teilbereichen transparent. Die Kunststoffschicht kann gefärbt oder klar sein. Die Kunststoffschicht kann bedruckt sein. Im Falle einer Lackkaschierung kann der Film bedruckt und/oder konterbedruckt sein. Eine Bedruckung und allfällig vorgesehene nicht transparente Teilbereiche der Kunststoff-schicht werden sinngemäss derart angeordnet, dass zumindest Teilbereiche der Prägung in der Metallfolie jeweils durch die transparenten Teile der Kunststoffschicht sichtbar bleiden.

Bevorzugte thermoplastische Kunststoffe sind beispielsweise Polyolefine. Beispiele von Polyolefinen sind Polyethylene, z.B. Polyethylen hoher Dichte (HDPE, Dichte grösser als 0,944 g/cm³), Polyethylene mittlerer Dichte (MDPE, Dichte 0,926-0,940 g/cm³), lineares Polyethylen mittlerer Dichte (LMDPE, Dichte 0,926-0,940 g/cm³), Polyethylen niedriger Dichte (LDPE, Dichte 0,910-0,925 g/cm³), lineares Polyethylen niedriger Dichte (LLDPE, Dichte 0,916-0,925 g/cm³), bzw. Gemische derselben. Andere Polyolefine sind Polypropylene, wie amorphes, kristallines oder hochkristallines Polypropylen, ataktisches oder isotaktisches Polypropylen und Gemische der genannten Polypropylene, gegossenes (cast) Polypropylen, Poly-1-buten, Poly-3-methylbuten, Poly-4-methylpenten und Copolymere davon, wie z.B. von Polyethylen mit Vinylacetat, Vinylalkohol oder Acrylsäure. Zu nennen sind auch Copolymerisate, bekannt als Ionomerharze, aus Ethylen mit etwa 11% Acrylsäure, Methacrylsäure, Acrylestern, Tetrafluorethylen oder Polypropylen. Zu den genannten Polymerisaten gehören auch die entsprechenden statistischen Copolymeren, Block-Copolymere oder Olefinpolymer-Elastomer-Mischungen. Bei Folien handelt es sich um unverstreckte und bevorzugt axial oder biaxial verstreckte Folien. Die Folien können ein Monomaterial oder ein zwei-, drei- oder mehrschichtiges Laminat sein.

Zweckmässige Verpackungsmaterialien weisen einen Schichtaufbau auf, enthaltend:
a) eine ganz oder teilflächig geprägte Metallfolie, insbesondere eine Aluminiumfolie,
b) eine mehrlagige Kunststoffschicht aus
   b₁) einer Lackkaschierung oder einem Schmelzextrudat und
   b₂) einer Folie enthaltend ein Polyolefin.

Verpackungsmaterialien weisen einen Schichtaufbau auf, enthaltend:
a) eine ganz oder teilflächig geprägte Metallfolie, insbesondere eine Aluminiumfolie,
b) eine mehrlagige Kunststoffschicht aus
   b₁) einem Schmelzextrudat aus Polyethlen und
   b₂) einer Folie enthaltend vorwiegend oder bestehend aus Polyethylen.

Die freie Seite der Metallfolie wird mit weiteren funktionellen Schichten belegt. Die Auswahl der funktionellen Schichten richtet sich nach dem Einsatzzweck des Verpackungsmaterials. Es werden auf der freien Seite der Metallfolie eine oder mehrere weitere Kunststoffschichten angeordnet. Die Kunststoffschichten können beispielsweise durch Lackkaschierung, durch Kalandrieren oder durch Coextrusion aufgebracht werden.

Das erfindungsgemässe Verpackungsmaterial kann beispielsweise auf der freien Seite der Metallfolie durch Lackieren, Kalandrieren, durch Lackkaschierung oder durch Coextrusion mit Kunststoffschichten belegt werden. Die Kunststoffschichten enthalten vorteilhaft thermoplastische Kunststoffe, wie die oben genannten Polyolefine, wobei die Polyethylene und Polypropylene besonders geeignet sind. Eine Lackierung oder Kaschierung kann in Mengen von z.B. 3 bis 80 g/m² angewendet werden. Kunststofffilme können beispielsweise eine Dicke von 20 bis 150, zweckmässig 20 bis 100 und vorzugsweise von 50 bis 80 µm aufweisen.

Die auf der freien Seite der Metallfolie angeordneten funktionellen Schichten weisen an einer Verpackung, hergestellt aus vorliegendem Verpakkungsmaterial, gegen die Innenseite der Verpackung, d.h. gegen den Inhalt in der Verpakkung. Deshalb kann es vorteilhaft sein. in den funktionellen Schichten eine Sperrschicht vorzusehen, um ein Eindringen von Flüssigkeiten. Dämpfe, Aromen usw. in die funktionelle Schicht zu verhindern. Als äusserste, an einer Verpackung nach aussen weisende. Schicht und/oder die innerste, gegen den Inhalt einer Verpackung weisende, Schicht, kann eine Siegelschicht oder siegelbare Schicht vorgesehen werden. Sofern die beschriebenen Schichten nicht an sich siegelbar sind, kann ein zusätzlicher Siegellack oder siegelbare Folie eingesetzt werden.

Das Verpackungsmaterial wird, entsprechend dem Schichtaufbau, für verschiedene Tuben verwendet.

Ein Verpackungsmaterial für Tuben enthält den Schichtaufbau:
a₁) eine funktionelle Schicht
   a) eine ganz oder teilflächig geprägte Metallfolie, insbesondere eine Aluminiumfolie oder eine ganz- oder teilflächig geprägte metallisierte Kunststofffolie
   b) eine mehrlagige Kunststoffschicht aus
      b₁) einer Lackkaschierung oder einem Schmelzextrudat und
      b₂) einer Folie enthaltend ein Polyolefin.

Die Folie b₂) kann ein oder beidseitig mit einem teilflächigen Druckmuster versehen sein.

Die funktionelle Schicht a₁) kann eine durch Kalandrieren, durch Lackkaschierung oder durch Coextrusion auf die Metallfolie aufgebrachte Kunststoffschicht sein.

Ein Verpackungsmaterial, als Beispiel geeignet für die Herstellung von Tuben, enthält den Schichtaufbau:
a₁) eine funktionelle Schicht aus
   einer Folie enthaltend Polyolefine, insbesondere Polyethylene oder Polypropylene, in Dicken von 20 bis 150 µm und
   einer Lackkaschierung oder einem Schmelzextrudat aus einem Polyethylen, in Mengen von 3 bis 80 g/m²,
   a) eine ganz oder teilflächig geprägte Metallfolie, insbesondere eine Aluminiumfolie, in einer Dicke von 7 bis 100 µm,
   b) eine mehrlagige Kunststoffschicht aus
      b₁) einer Lackkaschierung oder einem Schmelzextrudat aus einem Polyethylen, in Mengen von 3 bis 80 g/m², und
      b₂) einer Folie, enthaltend Polyolefine, insbesondere Polyethylene oder Polypropylene, in Dicken von 20 bis 200 µm.

Es handelt sich dabei um ein Verpackungsmaterial, welches, bezogen auf die Metallfolie, beispielhaft eine symmetrische Anordnung der Schichten aufweist. Die Dicken der einzelnen Schichten können ebenfalls in symmetrischer Weise gewählt sein. In erfinderischer Weise können auch Verpackungsmaterialien asymmetrischen Aufbaus gestaltet werden. An einer aus dem Verpackungsmaterial gefertigten Tube stellt die Polyolefinfolie der funktionellen Schicht a₁) die Innenseite und die Polyolefinfolie b₂) die Aussenseite der Tube und dabei insbesondere des Tubenrohres, dar. Die Polyolefine sind in der Regel siegelbar. Deshalb kann mittels Anlegen von Siegelnähten, aber auch durch Klebenähte, aus dem Verpackungsmaterial das Tubenrohr erzeugt werden. Das vorliegende Verpackungsmaterial ist demnach zur Erzeugung des Tubenrohres einer Tube geeignet. Die Materialwahl und der Aufbau des Tubenkopfes Tubenkopf Die Befestigung des Tubenkopfes und das Verschliessen des Tubenendes kann ebenfalls durch Siegeln oder z.B. auch durch Kleben oder Schweissen, erfolgen.

Ein typisches Verpackungsmaterial für Tuben weist folgenden Schichtaufbau auf:
a₁) eine funktionelle Schicht, die an der Tube nach innen weist, aus
   einer Polyethylenfolie einer Dicke von 40 bis 80 µm,
   einer Lackkaschierung oder einem Schmelzextrudat aus Polyethylen in Mengen von 30 bis 50 g/m²,
   a) eine ganz oder teilflächig geprägte Aluminiumfolie in einer Dicke von 8 bis 40 µm,
   b) eine mehrlagige transparente Kunststoffschicht aus
      b₁) einer Lackkaschierung oder einem Schmelzextrudat aus Polyethylen in Mengen von 30 bis 50 g/m², und
      b₂) einer Polyethylenfolie einer Dicke von 20 bis 200 µm, die an der Tube die Aussenseite bildet.

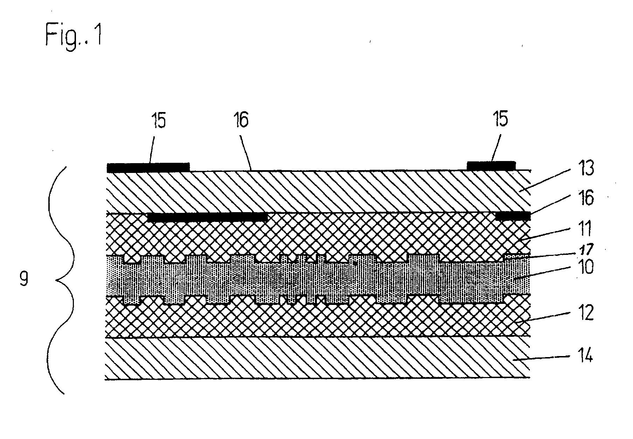

Die Figur 1 zeigt einen Schnitt durch ein Beispiel eines erfindungsgemässen Verpackungsmaterials 9. Die geprägte Metallfolie 10 ist auf der später an der Verpackung nach aussen weisenden Seite mit einer Schicht 11 eines Schmelzextrudates aus einem Polyethylen niedriger Dichte beschichtet. Darüber liegt eine Folie 13, wie eine Dreischichtfolie aus Polyethylen. Es sind mögliche Bedruckungen in Form eines an der Oberfläche angebrachten Druckes 15 und eines Konterdruckes 16 gezeigt. Die Beschichtung 11 und die Folie 13 sind transparent und die Prägung 17 ist durch die Kunststoffschicht aus Schmelzextrudat 11 und Folie 13 hindurch sichtbar. Auf der noch freien Seite der Metallfolie 10 ist eine weitere Schicht 12 eines Schmelzextrudates und darauf angebracht eine weitere Folie 14, beispielsweise eine Polyethylenfolie, angeordnet. Wird nun aus dem Verpackungsmaterial 9 eine Tube oder zumindest das Tubenrohr, erzeugt, so weist die Folie 14 auf die Innenseite der Tube und somit gegen den Inhalt. Die Schicht 12 und Folie 14 können transparent oder auch opak sein. Es kann vorteilhaft sein, in oder auf der Folie 14 eine Sperrschicht vorzusehen, um zu vermeiden dass Inhaltsstoffe oder Teile davon in die Kunststoffschicht hineindiffundieren und für vorzeitigen Verderb der Inhaltsstoffe oder zu einer Delamination des Verpackungsmaterials führen. Für den Betrachter einer Tube aus dem erfindungsgemässen Verpackungsmaterial ist neben einem allfällig vorhandenen Druckbild aus Druck 15 und Konterdruck 16, insbesondere die durch die Kunststoffschicht durchscheinende Prägung 17, sichtbar. Der metallische Glanz und die Reflektion der Metallfolie 10 und dabei besonders die durch die Prägung beeinflusste Reflexion, führen zu optischen Effekten, die sich am leichtesten mit den durch Hologramme erzielten visuellen Eindrücken vergleichen lassen. Durch die Verwendung von Druck 15 und Konterdruck16 und/oder durch nur in teilweise transparenten und/oder eingefärbten Folien 13 und/oder eingefärbte Prägungen 17 in der Metallfolie 10 lassen sich eine Vielzahl von graphischen Gestaltungsmöglichkeiten des Tubenäusseren erzielen. Ein Verpackungsmaterial, wie beschrieben, ist beispielsweise herstellbar durch Prägen der Metallfolie 10 mittels Prägewalzen, einseitiger Kaschierung mittels eines Schmelzextrudates 11 der Kunststofffolie 13 auf einer Seite der Metallfolie 10 und in einem weiteren Arbeitsgang dem Aufkaschieren mittels eines Schmelzextrudates12 der weiteren Kunststofffolie 14 auf der noch freien Seite der Metallfolie 10. Selbstverständlich lässt sich die Reihenfolge des Beschichtens ändern oder gleichzeitig ausführen.

## Patentansprüche

1. Tuben-Verpackungslaminat mit hologrammähnlichem Erscheinungsbild,
**dadurch gekennzeichnet, dass**
das Tuben-Verpackungslaminat (9) ein mehrschichtiges Material ist mit einem Schichtaufbau, bestehend aus:
a₁) einer oder mehreren funktionellen Schichten (12, 14) aus Kunststoff, darauf angeordnet
a) eine ganz- oder teilflächig geprägte Metallfolie (10), darauf angeordnet
b) eine zumindest in Teilbereichen transparente mehrlagige Kunststoffschicht aus
b₁) einer Lackkaschierung oder einem Schmelzextrudat (11) und
b₂) einer auf der Schicht b₁) angeordneten Folie enthaltend ein Polyolefin (13),
wobei die Prägung ein Raster oder ein sich regelmässig oder unregelmässig wiederholendes Muster, wie Damast- oder Würmchenmuster, ist, und an der Tuben-Verpackung die Kunststoffschicht b₂) (13) die aussen liegende Schicht bildet und die Prägung (17) der Metallfolie a) (10) durch die transparenten Bereiche der Kunststoffschicht b) (11,13) sichtbar ist.

2. Tubenverpackungslaminat gemäss Anspruch 1, **dadurch gekennzeichnet, dass** der Schichtaufbau nacheinander
a₁) eine funktionelle Schicht (12,14) aus
einer Folie (14), enthaltend Polyolefine, insbesondere Polyethylene oder Polypropylene, in Dicken von 20 bis 150 µm, und
eine Lackkaschierung oder einem Schmelzextrudat (12) aus einem Polyethylen, in Mengen von 3 bis 80 g/m²,
a) eine ganz oder teilflächig geprägte Metallfolie (10), insbesondere eine Aluminiumfolie, in einer Dicke von 7 bis 100 µm,
b) eine mehrlagige Kunststoffschicht (11,13)aus
b₁) einer Lackkaschierung oder einem Schmelzextrudat (11) aus einem Polyethylen, in Mengen von 3 bis 80 g/m²,und
b₂) einer Folie (13), enthaltend Polyolefine, insbesondere Polyethylene oder Polypropylene, in Dicken von 20 bis 200 µm,
enthält.

3. Tubenverpackungslaminat gemäss Anspruch 1, **dadurch gekennzeichnet, dass** das Verpakkungsmaterial einen Tubenkörper bildet und der Schichtaufbau nacheinander
a₁) eine funktionelle Schicht (12,14), die an der Tube nach innen weist, aus einer Polyethylenfolie (14) einer Dicke von 40 bis 80 µm und
einer Lackkaschierung oder einem Schmelzextrudat (12) aus Polyethylen in Mengen von 30 bis 50 g/m²,
a) eine ganz oder teilflächig geprägte Aluminiumfolie (10) in einer Dicke von 8 bis 40 µm,
b) eine mehrlagige transparente Kunststoffschicht (11,13) aus
b₁) einer Lackkaschierung oder einem Schmelzextrudat (11) aus Polyethylen in Mengen von 30 bis 50 g/m², und
b₂) einer Polyethylenfolie (13) einer Dicke von 20 bis 200 µm, die an der Tube die Aussenseite bildet,
enthält.

4. Tubenverpackungslaminat gemäss Anspruch 1, **dadurch gekennzeichnet, dass** die Folie b₂) (13) ein- oder beidseitig ein Druckmuster aufweist.

## Claims

1. Tube packaging laminate having an appearance similar to a hologram,
**characterised in that** the tube packaging laminate (9) is a multi-layered material having a layer structure consisting of:
a₁) one or more functional layers (12, 14) of plastic, arranged thereon
a) a metal foil (10) embossed over the whole or part of the surface, arranged thereon
b) a multi-layered plastic layer which is transparent at least in some regions made from
b₁) a lacquer coating or a melt extrudate (11) and
b₂) a film containing a polyolefin (13) arranged on the layer b₁),
wherein the embossed design is a grid or a regularly or irregularly repeating pattern, such as damask or small worm pattern, and the plastic layer b₂) (13) forms the outer-lying layer on the tube packaging and the embossed design (17) of the metal foil a) (10) is visible through the transparent regions of the plastic layer b) (11, 13).

2. Tube packaging laminate according to claim 1, **characterised in that** the layer structure contains one after another
a₁) a functional layer (12, 14) of
a film (14) containing polyolefins, in particular polyethylenes or polypropylenes, in thicknesses of 20 to 150 µm and
a lacquer coating or a melt extrudate (12) of a polyethylene, in quantities of 3 to 80 g/m²,
a) a metal foil (10) embossed completely or over part of the surface, in particular an aluminium foil, in a thickness of 7 to 100 µm,
b) a multi-layered plastic layer (11, 13) made from
b₁) a lacquer coating or a melt extrudate (11) of a polyethylene, in quantities of 3 to 80 g/m², and
b₂) a film (13) containing polyolefins, in particular polyethylenes or polypropylenes, in thicknesses of 20 to 200 µm.

3. Tube packaging laminate according to claim 1, **characterised in that** the packaging material forms a tube body and the layer structure contains one after another
a₁) a functional layer (12, 14), which on the tube points inwards, of
a polyethylene film (14) of a thickness of 40 to 80 µm and
a lacquer coating or a melt extrudate (12) of polyethylene in quantities of 30 to 50 g/m²,
a) an aluminium foil (10) embossed completely or over part of the surface in a thickness of 8 to 40 µm,
b) a multi-layered transparent plastic layer (11, 13) made from
b₁) a lacquer coating or a melt extrudate (11) of polyethylene in quantities of 30 to 50 g/m², and
b₂) a polyethylene film (13) of a thickness of 20 to 200 µm, which forms the outer side on the tube.

4. Tube packaging laminate according to claim 1, **characterised in that** the film b₂) (13) has a printing pattern on one or both sides.

## Revendications

1. Laminé d'emballage de tube avec aspect extérieur similaire à un hologramme, **caractérisé en ce que**
le laminé d'emballage de tube (9) est un matériau à plusieurs couches avec une structure de couche, constitué par :
a₁) une ou plusieurs couches fonctionnelles (12, 14) en matière plastique sur la ou lesquelles est agencée
a) une feuille métallique (10) gaufrée sur toute la surface ou sur une surface partielle, sur laquelle est agencée
b) une couche de matière plastique à plusieurs couches, transparente au moins dans des régions partielles, en
b₁) un contrecollage de laque ou un produit d'extrusion fondu (11), et
b₂) une feuille contenant un polyoléfine (13), agencée sur la couche b₁), le gaufrage étant une trame ou un motif se répétant de manière régulière ou irrégulière, comme un motif de damas ou de vermicelles, et sur l'emballage du tube, la couche de matière plastique b₂) (13) forme la couche située à l'extérieur, et le gaufrage (17) de la feuille métallique a) (10) est visible à travers les régions transparentes de la couche de matière plastique b) (11, 13).

2. Laminé d'emballage de tube selon la revendication 1, **caractérisé en ce que** la structure en couches contient les une après les autres
a₁) une couche fonctionnelle (12, 14) en
une feuille (14) contenant des polyoléfines, en particulier des polyéthylènes ou des polypropylènes, dans des épaisseurs de 20 à 150µm, et
un contrecollage de laque ou un produit d'extrusion fondu (12) en un polyéthylène, dans des quantités de 3 à 80 g/m²,
a) une feuille métallique (10) gaufrée sur toute la surface ou sur une surface partielle, en particulier une feuille d'aluminium, dans une épaisseur de 7 à 100 µm,
b) une couche de matière plastique (11, 13) en plusieurs couches en
b₁) un contrecollage en laque ou un produit d'extrusion fondu (11) en un polyéthylène, dans des quantités de 3 à 80g/m², et
b₂) une feuille (13) contenant des polyoléfines, en particulier des polyéthylènes ou des polypropylènes, dans des épaisseurs de 20 à 200µm.

3. Laminé d'emballage de tube selon la revendication 1, **caractérisé en ce que** le matériau d'emballage forme un corps de tube et la structure de couche contient les une après les autres
a₁) une couche fonctionnelle (12, 14) qui est tournée vers l'intérieur sur le tube, en une feuille (14) de polyéthylène d'une épaisseur de 40 à 80µm, et
un contrecollage de laque ou un produit d'extrusion fondu (12) en un polyéthylène, dans des quantités de 30 à 50 g/m²,
a) une feuille d'aluminium (10) gaufrée sur toute la surface ou sur une surface partielle, dans une épaisseur de 8 à 40 µm,
b) une couche de matière plastique (11, 13) transparente en plusieurs couches en
b₁) un contrecollage en laque ou un produit d'extrusion fondu (11) en polyéthylène, dans des quantités de 30 à 50g/m², et
b₂) une feuille de polyéthylène (13) d'une épaisseur de 20 à 200µm qui forme le côté extérieur du tube.

4. Laminé d'emballage de tube selon la revendication 1, **caractérisé en ce que** la feuille b₂) (13) présente un motif imprimé sur un ou sur les deux côtés.
